# FASCICULE DE BREVET EUROPEEN

(11) **EP 0 509 944 B1**
(45) Date de publication et mention de la délivrance du brevet: **03.01.1996**
(21) Numéro de dépôt: 92440046.8
(22) Date de dépôt: 16.04.1992
(51) Int. Cl.: B60P 1/36

(54) **Dispositif de déversement latéral destiné, notamment, à être monté sur un camion ou un véhicule similaire**
Seitenkippvorrichtung zur, insbesondere, Montage auf einem Lastkraftwagen oder dergleichen
Lateral tipping apparatus for, in particular, mounting on a truck or similar

(30) Priorité: 17.04.1991 FR 9104906
(43) Date de publication de la demande: 21.10.1992
(73) Titulaire: Gartiser, Jean-Paul, F-57370 Phalsbourg (FR)
(72) Inventeur: Gartiser, Jean-Paul, F-57370 Phalsbourg (FR)
(74) Mandataire: Nuss, Pierre

(56) Documents cités:
- EP-A- 0 017 587
- DE-A- 3 034 030
- DE-U- 8 910 379
- US-A- 3 122 251

## Description

La présente invention concerne essentiellement le domaine des travaux publics et du génie civil, et a pour objet un dispositif de déversement latéral destiné, notamment, à être monté sur un camion ou un véhicule similaire pourvu préférentiellement d'une benne basculante.

Actuellement, on connaît, pour la réalisation de trottoirs, par exemple, principalement deux types de dispositifs de déversement ou d'épandage différents, pouvant être montés sur des camions et permettant de réaliser un déversement uniforme, sur un côté latéral du camion, des enrobés, des gravillons ou du sable contenus dans la benne, au cours de l'avancement dudit camion.

Le premier type de dispositifs se présente sous la forme d'une goulotte munie d'une vis d'Archimède et est préférentiellement utilisé pour le déversement d'enrobés, notamment d'enrobés de bitume. Un tel dispositif est notamment décrit dans FR-A-2453049 ou dans US-A-3122251.

Le deuxième type de dispositifs consiste en un tapis transporteur et sert principalement pour l'épandage latéral de gravillons ou de sable.

Néanmoins, ces dispositifs de déversement connus sont tous fixés de manière rigide au camion correspondant, leur interdisant tout déplacement par rapport à ce dernier, et nécessitent, chacun, un assemblage spécifique à la benne du camion à équiper, ce qui empêche une interchangeabilité rapide entre plusieurs dispositifs, éventuellement de types différents, sur un même camion.

Le problème posé à la présente invention consiste, par conséquent, à concevoir un dispositif de déversement latéral pouvant être déplacé par rapport à la benne du camion sur laquelle il est fixé par exemple, tant en translation qu'en rotation, et présentant une structure d'assemblage simplifiée autorisant un changement rapide du mode de déversement mis en oeuvre.

A cet effet, la présente invention a pour objet un dispositif de déversement latéral destiné, notamment, à être monté sur un camion ou un véhicule similaire pourvu préférentiellement d'une benne basculante, principalement composé, d'une part, d'un corps support constituant, au moins partiellement, la paroi arrière de la benne et muni d'au moins une ouverture d'évacuation réglable et, d'autre part, d'un dispositif de convoyage s'étendant parallèlement à la paroi arrière de la benne et au moins sous la ou les ouvertures d'évacuation de cette dernière, caractérisé en ce que le dispositif de convoyage est fixé de manière pivotante par son côté proximal sur le corps support ou la partie arrière de la benne par l'intermédiaire, d'une part, d'un axe d'articulation porté par au moins deux bras supports solidaires de la partie arrière de la benne ou du corps support et, d'autre part, d'au moins un bras de maintien de longueur réglable reliant le côté distal du dispositif de convoyage à la partie arrière de la benne ou au corps support, ledit dispositif de convoyage pouvant, en outre, coulisser le long dudit axe d'articulation.

L'invention sera mieux comprise grâce à la description ci-après, qui se rapporte aux modes de réalisation préférés, donnés à titre d'exemples non limitatifs, et expliqués avec référence aux dessins schématiques annexés, dans lesquels :
la figure 1 est une vue en élévation frontale du dispositif conforme à l'invention selon un premier mode de réalisation, dans une position de fonctionnement ;
la figure 2 est une vue en élévation frontale du dispositif représenté à la figure 1, dans sa position de non-utilisation ;
la figure 3 est une vue en élévation latérale et partiellement en coupe du dispositif représenté à la figure 1, et,
la figure 4 est une vue identique à celle de la figure 3 du dispositif conforme à l'invention selon un second mode de réalisation.

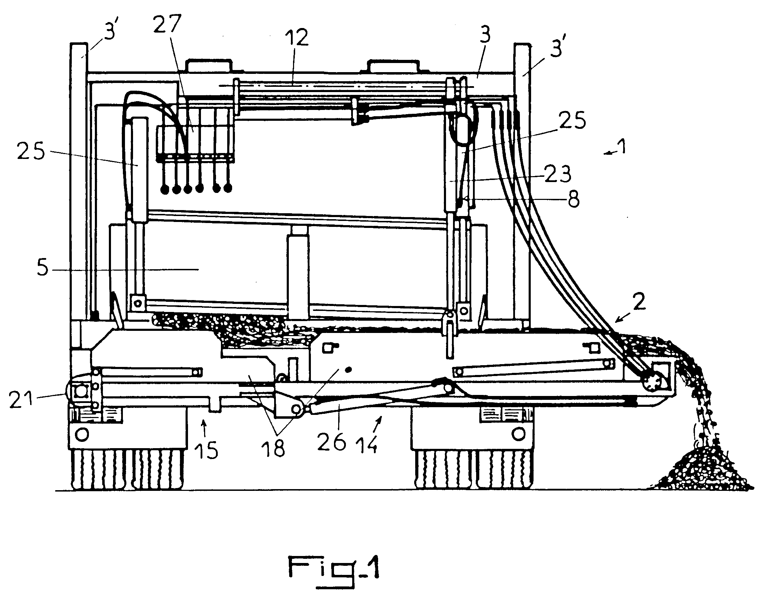

Conformément à l'invention, et comme le montrent les figures 1 à 4 des dessins annexés, le dispositif de convoyage 2, faisant partie du dispositif de déversement, est fixé de manière pivotante par son côté proximal sur le corps support 3 ou la partie arrière 4' de la benne 4 par l'intermédiaire, d'une part, d'un axe d'articulation 6 porté par au moins deux bras supports 7 solidaires de la partie arrière de la benne ou du corps support et, d'autre part, d'au moins un bras de maintien 8 de longueur réglable reliant le côté distal du dispositif de convoyage 2 à la partie arrière 4' de la benne 4 ou au corps support 3, ledit dispositif de convoyage 2 pouvant, en outre, coulisser le long dudit axe d'articulation 6.

Le corps support 3 constitue avantageusement la totalité de la paroi arrière 4' de la benne 4 du camion ou du véhicule similaire, les bras supports 7 pouvant être rapportés sur des montants latéraux 3' solidaires du corps support 3 et permettant sa mise en place sur les extrémités arrières des parois latérales 4'' de ladite benne 4.

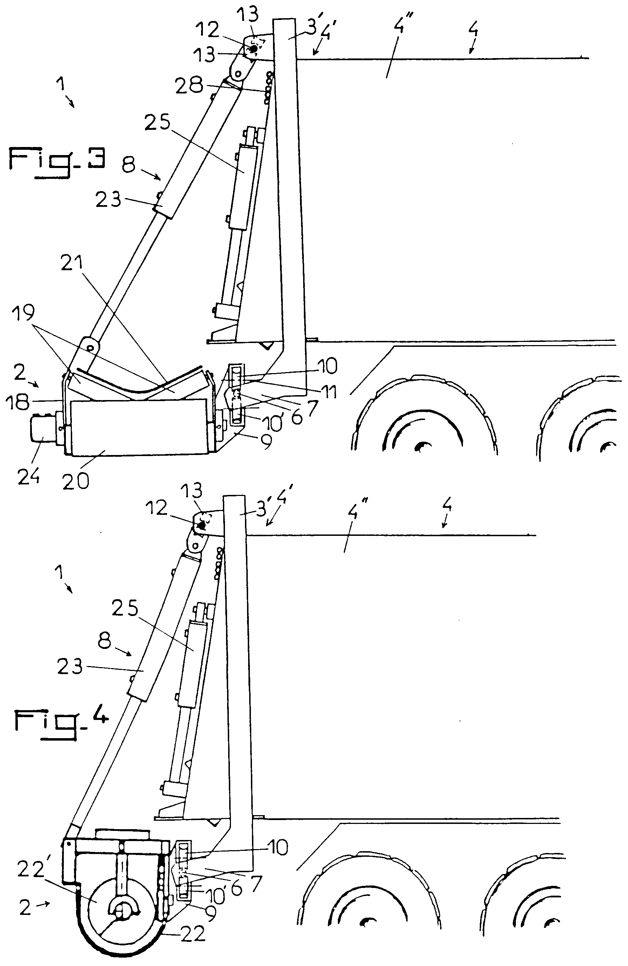

Selon une première caractéristique de l'invention, représentée sur les figures 3 et 4 des dessins annexés, le dispositif de convoyage 2 comporte au moins deux supports d'accrochage 9, disposés sur son côté proximal et traversés par l'axe d'articulation 6. Chacun de ses supports d'accrochage 9 est muni avantageusement d'au moins un galet 10, 10' d'appui et de guidage dont la section, suivant un plan contenant son axe de rotation 11, présente une forme biconcave.

Ainsi, le dispositif de convoyage 2 pourra, d'une part, pivoter autour de l'axe d'articulation 6, lui permettant ainsi de conserver une position horizontale quelle que soit l'inclinaison de la benne 4 basculante au cours d'une opération de déchargement, et, d'autre part, de coulisser le long de ce même axe d'articulation 6, en pouvant être bloqué dans une position de décalage latéral quelconque par rapport à la benne 4, au moyen, par exemple, d'un frein ou d'un dispositif d'assujettissement similaire non représenté.

De manière préférentielle, chaque support d'accrochage 9 comporte un galet supérieur 10 et un galet inférieur 10', enserrant l'axe d'articulation 6 entre eux.

Conformément à une autre caractéristique de l'invention, représentée également sur les figures 3 et 4 des dessins annexés, le bras de maintien 8 est avangageusement accroché, avec faculté de rotation et de translation, à un axe 12 solidaire du corps support 3 par l'intermédiaire de galets 13 d'appui et de guidage, également de section biconcave, son extrémité opposée étant fixée sur le côté distal du dispositif de convoyage 2 par l'intermédiaire d'une liaison pivot.

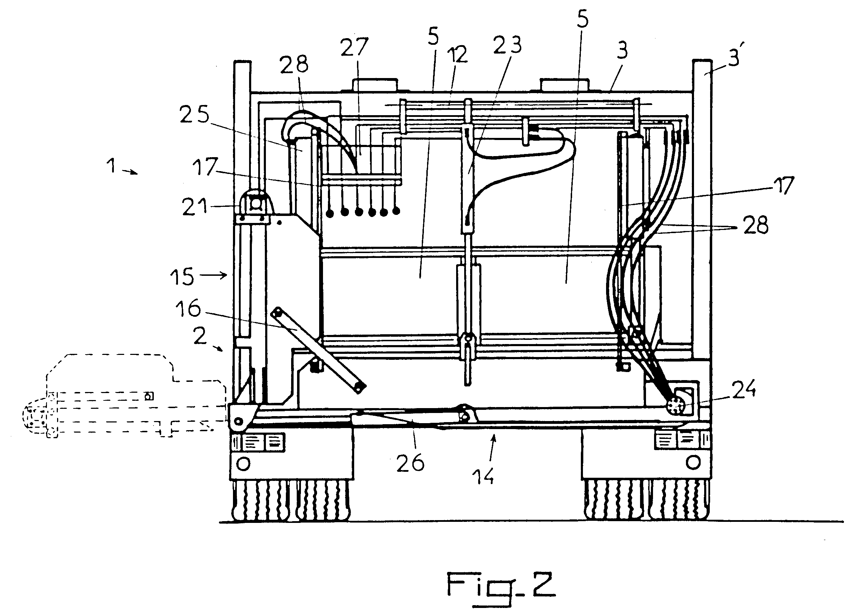

Comme le montrent les figures 1 et 2 des dessins annexés, le dispositif de convoyage 2 est composé de deux parties 14 et 15 contiguës en position de fonctionnement, à savoir, d'une part, une première partie 14 dont la longueur est environ égale à la largeur de la benne 4 et, d'autre part, une seconde partie 15 escamotable pouvant, éventuellement, pivoter dans une position de non-utilisation verticale. En position de fonctionnement, le dispositif de convoyage 2 pourra, par conséquent, du fait de sa faculté de coulissement le long de l'axe d'articulation 6, dépasser d'une longueur réglable, dans la limite de la plage de déplacement possible, de l'un quelconque des deux côtés latéraux de la benne 4 (Fig. 1 et tracé en trait interrompu de la Fig. 2)

Afin d'éviter le gauchissement des différents éléments d'assemblage du dispositif de convoyage 2 au corps support 3, le dispositif de déversement latéral 1 conforme à l'invention comporte au moins un élément de liaison 16, 17 supplémentaire amovible, pour le maintien du dispositif de convoyage 2 en cas de non-utilisation prolongée. Comme le montre la figure 2 des dessins annexés, ces éléments de liaison supplémentaires peuvent se présenter, d'une part, sous la forme d'au moins un profilé rigide 16 reliant le côté distal de la première partie du dispositif de convoyage 2 au corps support 3 et assurant son positionnement horizontal, et, d'autre part, une barre de connexion 17, disposée entre ladite première partie 14 et la partie escamotable 15 et assujettissant cette dernière en position verticale.

Selon un premier mode de réalisation de l'invention, représentée sur les figures 1 à 3 des dessins annexés, le dispositif de convoyage 2 se présente sous la forme d'une bande transporteuse à fonctionnement réversible. Ladite bande transporteuse est essentiellement composée d'une structure rigide longitudinale 18 en deux parties 14 et 15, sur lesquelles sont disposés avec faculté de rotation des rouleaux de support 19 et d'entraînement 20, portant une bande 21 en une matière caoutchouteuse.

Conformément à un second mode de réalisation de l'invention, représenté à la figure 4 des dessins annexés, le dispositif de convoyage 2 se présente sous la forme d'une goulotte 22 dans laquelle est disposée longitudinalement, de manière concentrique et avec faculté de rotation, une vis transporteuse hélicoïdale 22', entraînée, éventuellement à vitesse réglable, par une force motrice pouvant être installée à l'une quelconque des deux extrémités de ladite vis transporteuse 22' . Afin d'inverser le sens de rotation de la vis transporteuse 22', et, par conséquent, la direction de convoyage, il suffit de connecter la force motrice à l'extrémité opposée de ladite vis transporteuse 22' .

Selon une caractéristique supplémentaire de l'invention, et comme le montrent les figures 1 à 4 des dessins annexés, le réglage de l'inclinaison et du positionnement latéral ainsi que, le cas échéant, l'entraînement du dispositif de convoyage 2, l'actionnement des ouvertures d'évacuation 5, et le repliage et dépliage de la partie escamotable 15 dudit dispositif de convoyage 2 sont réalisés au moyen d'éléments à fonctionnement hydraulique 23, 24, 25, 26, reliés au circuit hydraulique du camion ou, le cas échéant, à une pompe hydraulique additionnelle (non représentés), par l'intermédiaire d'un poste de commande 27 et de tuyaux de raccordement flexibles 28. Chacun des vérins 23, 25 et 26 mis en oeuvre est, de manière avantageuse, un vérin à double action et le moteur hydraulique 24, disposé dans le rouleau d'entraînement 20, présente également un fonctionnement réversible à vitesse variable.

Grâce à l'invention, il est donc possible de réaliser un dispositif de déversement latéral 1 dont le dispositif de convoyage 2, à fonctionnement réversible, peut, d'une part, être incliné par pivotement de manière contrôlée et, d'autre part, être déplacé en translation parallèlement à la partie arrière 4' de la benne 4, permettant ainsi de déverser, de manière uniforme, le contenu de ladite benne 4 à une distance réglable de l'un quelconque des deux côtés latéraux du camion, lors de l'avancement de ce dernier, le changement de côté de déversement pouvant s'effectuer par simple coulissement dudit dispositif de convoyage et inversion de son sens de convoyage.

En outre, par son mode d'assemblage et de montage simplifié, on obtient une interchangeabilité rapide entre les deux types de dispositifs de convoyage 2 pouvant être mis en oeuvre, en fonction du matériau à déverser, et ce en utilisant les mêmes éléments d'assemblage 6 et 8.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, comme défini dans les revendications suivantes.

## Revendications

1. Dispositif de déversement latéral destiné, notamment, à être monté sur un camion ou un véhicule similaire pourvu préférentiellement d'une benne basculante (4), principalement composé, d'une part, d'un corps support constituant, au moins partiellement, la paroi arrière (41) de la benne (4) et muni d'au moins une ouverture réglable et, d'autre part, d'un dispositif de convoyage (2) s'étendant parallèlement à la paroi arrière de ladite benne et au moins sous la ou les ouvertures d'évacuation de cette dernière, caractérisé en ce que le dispositif de convoyage (2) est fixé de manière pivotante par son côté proximal sur le corps support (3) ou la partie arrière (4') de la benne (4) par l'intermédiaire, d'une part, d'un axe d'articulation (6) porté par au moins deux bras supports (7) solidaires de la partie arrière de la benne ou du corps support 3 et, d'autre part, d'au moins un bras de maintien (8) de longueur réglable reliant le côté distal du dispositif de convoyage (2) à la partie arrière (4') de la benne (4) ou au corps support, ledit dispositif de convoyage (2) pouvant, en outre, coulisser le long dudit axe d'articulation (6).

2. Dispositif de déversement latéral, selon la revendication 1, caractérisé en ce que le dispositif de convoyage (2) comporte au moins deux supports d'accrochage (9), disposés sur son côté proximal et traversés par l'axe d'articulation (6).

3. Dispositif de déversement latéral, selon la revendication 2, caractérisé en ce que chaque support d'accrochage (9) est muni d'au moins un galet (10, 10') d'appui et de guidage dont la section, suivant un plan contenant son axe de rotation (11), présente une forme biconcave.

4. Dispositif de déversement latéral, selon la revendication 3, caractérisé en ce que chaque support d'accrochage 9 comporte un galet supérieur (10) et un galet inférieur (10'), enserrant l'axe d'articulation (6) entre eux.

5. Dispositif de déversement latéral, selon l'une quelconque des revendications 1 à 4, caractérisé en ce que le bras de maintien (8) est avangageusement accroché, avec faculté de rotation et de translation, à un axe (12) solidaire du corps support (3) par l'intermédiaire de galets (13) d'appui et de guidage, également de section biconcave, son extrémité opposée étant fixée sur le côté distal du dispositif de convoyage (2) par l'intermédiaire d'une liaison pivot.

6. Dispositif de déversement latéral, selon l'une quelconque des revendications 1 à 5, caractérisé en ce que le dispositif de convoyage est composé de deux parties (14 et 15) contiguës en position de fonctionnement, à savoir, d'une part, une première partie (14) dont la longueur est environ égale à la largeur de la benne (4) et, d'autre part, une seconde partie (15) escamotable pouvant, éventuellement, pivoter dans une position de non-utilisation verticale.

7. Dispositif de déversement latéral, selon l'une quelconque des revendications 1 à 6, caractérisé en ce qu'il comporte au moins un élément de liaison (16, 17) supplémentaire amovible, pour le maintien du dispositif de convoyage (2) en cas de non-utilisation prolongée.

8. Dispositif de déversement latéral, selon l'une quelconque des revendications 1 à 7, caractérisé en ce que le dispositif de convoyage (2) se présente sous la forme d'une bande transporteuse à fonctionnement réversible.

9. Dispositif de déversement latéral, selon l'une quelconque des revendications 1 à 7, caractérisé en ce que le dispositif de convoyage (2) se présente sous la forme d'une goulotte (22) dans laquelle est disposée longitudinalement, de manière concentrique et avec faculté de rotation, une vis transporteuse hélicoïdale (22').

10. Dispositif de déversement latéral, selon l'une quelconque des revendications 1 à 9, caractérisé en ce que le réglage de l'inclinaison et du positionnement latéral ainsi que, le cas échéant, l'entraînement du dispositif de convoyage (2), l'actionnement des ouvertures d'évacuation (5), et le repliage et dépliage de la partie escamotable (15) dudit dispositif de convoyage (2) sont réalisés au moyen d'éléments à fonctionnement hydraulique (23, 24, 25, 26) reliés au circuit hydraulique du camion ou, le cas échéant, à une pompe hydraulique additionnelle, par l'intermédiaire d'un poste de commande (27) et de tuyaux de raccordement flexibles (28).

## Claims

1. Lateral tipping apparatus, in particular for mounting on a truck or a similar vehicle preferably provided with a tilting bucket (4), mainly composed, on the one hand, of a supporting body constituting, at least in part, the back wall (41) of the bucket (4) and equipped with at least one adjustable orifice and, on the other hand, of a conveying device (2) extending parallel to the back wall of said bucket and at least beneath the discharge orifice or orifices thereof, characterised in that the conveying device (2) is pivotally fixed by its proximal side on the supporting body (3) or the back part (4') of the bucket (4) by means, on the one hand, of a hinge pin (6) carried by at least two supporting arms (7) integral with the back part of the bucket or of the supporting body (3) and, on the other hand, of at least one holding arm (8) of adjustable length connecting the distal side of the conveying device (2) to the back part (4') of the bucket (4) or to the supporting body, said conveying device (2) also being able to slide along said hinge pin (6).

2. Lateral tipping apparatus according to claim 1, characterised in that the conveying device (2) comprises at least two securing supports (9) arranged on its proximal side and traversed by the hinge pin (6).

3. Lateral tipping apparatus according to claim 2, characterised in that each securing support (9) is equipped with at least one bearing and guiding wheel (10, 10') of which the cross section, in a plane containing its axis of rotation (11), has a double-concave shape.

4. Lateral tipping apparatus according to claim 3, characterised in that each securing support (9) comprises an upper wheel (10) and a lower wheel (10') enclosing the hinge pin (6) between themselves.

5. Lateral tipping apparatus according to any one of claims 1 to 4, characterised in that the holding arm (8) is advantageously secured, with the facility for rotation and translation, to an axis (12) integral with the supporting body (3) by means of bearing and guiding wheels (13) also of double-concave cross section, its opposite end being fixed on the distal side of the conveying device (2) by means of a pilot joint.

6. Laterial tipping apparatus according to any one of claims 1 to 5, characterised in that the conveying device is composed of two parts (14 and 15) which are adjacent in the operating position, that is on the one hand a first part (14) of which the length is approximately equal to the width of the bucket (4) and, on the other hand, a second retractable part (15) optionally capable of pivoting into a vertical position of non-use.

7. Lateral tipping apparatus according to any one of claims 1 to 6, characterised in that it comprises at least one removable additional connecting element (16, 17) for holding the conveying device (2) in the event of prolonged non-use.

8. Lateral tipping apparatus according to any one of claims 1 to 7, characterised in that the conveying device (2) assumes the form of a reversible conveyor belt.

9. Lateral tipping apparatus according to any one of claims 1 to 7, characterised in that the conveying device (2) assumes the form of a chute (22) in which a helical conveying screw (22') is arranged longitudinally in a concentric manner and with the facility for rotation.

10. Lateral tipping apparatus according to any one of claims 1 to 9, characterised in that the adjustment of the inclination and lateral positioning and, if applicable, the driving of the conveying device (2), the actuation of the discharge orifices (5) and the folding and unfolding of the retractable part (15) of said conveying device (2) are carried out by means of hydraulically operating elements (23, 24, 25, 26) connected to the hydraulic circuit of the truck or, if applicable, to an additional hydraulic pump by means of a control station (27) and of flexible connecting hoses (28).

## Patentansprüche

1. Seitonkippvorrichtung bzw. Seitenschüttvorrichtung, insbesondere zur Montage auf einem Lastkraftwagen oder einem ähnlichen Fahrzeug, Vorzugsweise Versehen mit einem Kipperaufbau (4), hauptsächlich bestehend, einerseits, aus einen Trägerkörper (3), wenigstens teilweise die Rückwand (4') des Kipperaufbaus (4) bildend und mit wenigstens einer verstellbaren Öffnung versehen, und andrerseits aus einer Fördervorrichtung (2), die sich parallel zu der Rückwand des besagten Kipperaufbaus und wenigstens unter der Öffnung oder den Öffnungen zur Entleerung dieses letzteren erstreckt,
**dadurch gekennzeichnet,**
daß die Fördereinrichtung (2) durch ihre nahe Seite an dem Trägerkörper (3) oder der Rückseite (4') des Kipperaufbaus schwenkbar befestigt ist mittels, einerseits, einer Gelenkachse (6), getragen durch wenigstens zwei Tragarme (7), fest verbunden mit dem hinteren Teil des Kipperaufbaus oder dem Trägerkörper (3) und, andererseits, wenigstens einem Haltearm (8) mit verstellbarer Länge, der die ferne Seite dar Fördereinrichtung (2) verbindet mit dem hinteren Teil (4') des Kipperaufbaus (4) oder mit dem Trägerkörper, wobei die Fördereinrichtung (2) außerdem an der Gelenkachse (6) entlanggleiten kann.

2. Seitenschüttvorrichtung nach Anspruch 1, dadurch gekennzeichnet, daß die Fördervorrichtung (2) wenigstens zwei Einhängträger (9) umfaßt, angeordnet auf ihrer nahen Seite und durchquert von der Gelenkachse (6).

3. Seitenschüttvorrichtung nach Anspruch 2, dadurch gekennzeichnet, daß jeder Einhangträger (9) versehen ist mit wenigstens einer Stütz- und Führungsrolle (10, 10'), deren Querschnitt in einer ihre Rotationsachse (11) enthaltenden Ebene eine bikonkave Form aufweist.

4. Seitenschüttvorrichtung nach Anspruch 3, dadurch gekennzeichnet, daß jeder Einhangträger (9) eine obere Rolle (10) und eine untere Rollel (10') umfaßt, die die Gelenkachse (6) zwischen sich einspannen.

5. Seitenschüttvorrichtung nach einem der Ansprüche 1 bis 4, dadurch gekennzeichnet, daß der Haltearm (8) vorteilhafterweise drehbar und parallelverschiebbar aufgehängt ist an einer Achse (12), verbunden mit dem Trägerkörper (3) mittels Stütz- und Führungsrollen (13), ebenfalls mit bikonkavem Querschnitt, wobei sein entgegengesetztes Ende befestigt ist an der fernen Seite der Fördervorrichtung (2) durch eine Gelenkverbindung.

6. Seitenschüttvorrichtung nach einem der Ansprüche 1 bis 5, dadurch gekennzeichnet, daß die Fördervorrichtung gebildet wird durch zwei im Betriebszustand aneinandergrenzende Teile (14 und 15), nämlich einerseits einen ersten Teil (14), dessen Länge ungefähr gleich der Breite des Kipperaufbaus (4) ist, und andrerseits einen wegschwenkbaren zweiten Teil (15), der eventuell in eine vertikale Nichtbenutzungsstellung geschwenkt werden kann.

7. Seitenschüttvorrichtung nach einem der Ansprüche 1 bis 6, dadurch gekennzeichnet, daß sie wenigstens ein lösbares zusätzliches Verbindungselement (16, 17) umfaßt, zum Festhalten der Fördervorrichtung (2) im Falle einer längeren Nichtbenutzung.

8. Seitenschüttvorrichtung nach einem der Ansprüche 1 bis 7, dadurch gekennzeichnet, daß die Fördervorrichtung (2) sich präsentiert in Form eines Transportbandes mit Umkehrbetrieb.

9. Seitenschüttvorrichtung nach einem der Ansprüche 1 bis 7, dadurch gekennzeichnet, daß die Fördervorrichtung (2) sich präsentiert in Form einer Rutsche (22), in der längs, konzentrisch und drehbar eine spiralförmige Förderschnecke (22') angeordnet ist.

10. Seitenschüttvorrichtung nach einem der Ansprüche 1 bis 9, dadurch gekennzeichnet, daß die Einstellung der Neigung und der seitlichen Stellung sowie, gegebenfalls, der Antrieb der Fördervorrichtung (2), die Betätigung der Entleerungsöffnungen (5) und das Hochklappen und Herunterklappen des wegschwenkbaren Teils (15) der Fördervorrichtung (2) ausgeführt werden mittels Hydraulikelementen (23, 24, 25, 26), die mit dem Hydrauliksystem des Lastwagens oder gegebenenfalls mit einer zusätzlichen Hydraulikpumpe durch eine Steuerungseinrichtung (27) und flexible Verbindungsrohre (28) verbunden sind.
